Europäisches Patentamt

**European Patent Office**

**Office européen des brevets**

(11) Numéro de publication: **0 242 923 B1**

# FASCICULE DE BREVET EUROPEEN

(45) Date de publication de fascicule du brevet: **05.08.92** (51) Int. Cl.⁵: **H04N 5/44**

(21) Numéro de dépôt: **87200723.2**

(22) Date de dépôt: **16.04.87**

(54) **Convertisseur de signaux vidéo.**

(30) Priorité: **25.04.86 FR 8606031**

(43) Date de publication de la demande:
**28.10.87 Bulletin 87/44**

(45) Mention de la délivrance du brevet:
**05.08.92 Bulletin 92/32**

(84) Etats contractants désignés:
**DE FR GB IT**

(56) Documents cités:
**EP-A- 0 169 527**
**WO-A-85/02080**

(73) Titulaire: **LABORATOIRES D'ELECTRONIOUE
PHILIPS
3, Avenue Descartes
F-94450 Limeil-Brévannes(FR)**

(84) Etats contractants désignés:
**FR**

(73) Titulaire: **N.V. Philips' Gloeilampenfabrieken
Groenewoudseweg 1
NL-5621 BA Eindhoven(NL)**

(84) Etats contractants désignés:
**DE GB IT**

(72) Inventeur: **Chantelou, Olivier
Société Civile S.P.I.D. 209 rue de l'Université
F-75007 Paris(FR)**

(74) Mandataire: **Landousy, Christian et al
Société Civile S.P.I.D. 156, Boulevard Haussmann
F-75008 Paris(FR)**

Rank Xerox (UK) Business Services

## Description

La présente invention concerne un convertisseur de signaux vidéo.

La revue "Radio Mentor Elektronik", n°5, 1975, page 196, décrit un procédé et un dispositif de traitement de signaux vidéo dans lesquels il est prévu notamment une opération de sélection de signaux vidéo. Cette opération de sélection, associé à une opération ultérieure de décision, est réalisée dans un filtre non-linéaire dont la mise en oeuvre permet d'obtenir une image de qualité améliorée.

Le but de l'invention est de proposer un convertisseur de signaux vidéo mettant toujours en oeuvre une opération du type sélection mais évitant de recourir à une opération de décision dont le principe introduit des phénomènes de papillotement aux points de commutation.

A cet effet, le convertisseur selon l'invention est caractérisé en ce qu'il comprend :

(a) un circuit de filtrage vertical par calcul, en chaque point de la ligne courante d'image à générer, d'une valeur résultant de la pondération de celles attachées aux points de même position horizontale mais appartenant à au moins deux lignes voisines de cette ligne courante dans la même trame, dite trame courante ;

(b) un circuit de sélection de signaux vidéo par tri et choix de la valeur intermédiaire parmi au moins trois signaux dont l'un est celui obtenu en sortie dudit circuit de filtrage vertical et dont les autres sont ceux attachés à des points de même position que ledit point de la ligne courante mais appartenant au moins à la trame qui précède et à la trame qui suit ladite trame courante ;

(c) un circuit de reconstitution d'image finale non entrelacée, la ligne courante de ladite image étant constituée alternativement de la ligne correspondante de l'image initiale quand cette ligne correspondante existe et d'une ligne reconstruite selon les opérations précédentes de filtrage et de sélection quand cette ligne correspondante n'est pas présente.

Le convertisseur ainsi proposé est avantageux en ce sens que son principe même, qui consiste à opérer par tri de valeurs et non par décision, évite effectivement les phénomènes de papillotement rencontrés aux points de commutation dans les réalisations faisant appel aux procédés antérieurs. Par ailleurs, dans le cas d'images fixes, on ne constate avec ce convertisseur aucune perte de résolution spatiale, tandis que, dans le cas d'images mobiles, l'absence de pondération dans la direction temporelle évite pratiquement tout effet de traînage.

La mise en oeuvre d'un tel convertisseur est particulièrement intéressante dans le domaine de la télévision. Dans le cadre de cette application, selon un mode de réalisation préférentiel de l'invention, ledit convertisseur est remarquable en ce que :

(a) le circuit de filtrage vertical comprend un circuit d'interpolation verticale par pondération des signaux associés à la ligne courante et à deux ou plusieurs lignes voisines de celle-ci dans la même trame, dite trame courante ;

(b) le circuit de sélection comprend une première mémoire retardant le signal d'entrée de la durée d'une trame moins une demi-période ligne, une deuxième mémoire retardant la sortie de la première mémoire d'une trame plus une demi-période ligne, deux premier et deuxième circuits à retard dont l'entrée est reliée pour le premier de ces circuits à l'entrée de la première mémoire et pour le deuxième à la sortie de la deuxième mémoire, et un circuit de tri recevant sur ses trois entrées A, B, C respectivement le signal de sortie du deuxième circuit à retard, le signal de sortie du circuit d'interpolation verticale, et le signal de sortie du premier circuit à retard, lesdits circuits à retard étant prévus pour compenser le retard introduit par ledit circuit d'interpolation verticale et garantir le réalignement temporel des signaux se présentant sur lesdites entrées A, B, C ;

(c) le circuit de reconstitution d'image finale non entrelacée comprend un premier jeu de deux mémoires recevant alternativement la sortie du circuit de tri, et un deuxième jeu de deux mémoires recevant alternativement la sortie de la première mémoire de retard du signal d'entrée par l'intermédiaire d'un troisième circuit à retard prévu également pour le réalignement temporel de ladite sortie de la première mémoire, la sortie dudit convertisseur étant constituée alternativement par la sortie du premier jeu de mémoires ou par celle du deuxième jeu de mémoires.

La demande de brevet européen EP-A-169527 décrit un récepteur de télévision incorporant un dispositif de conversion de signaux vidéo qui, certes, comprend lui aussi des moyens de sélection de signaux vidéo. Mais cette sélection est effectuée parmi des signaux qui ne proviennent que d'une seule trame et ne constitue donc qu'une opération purement spatiale, alors que, dans le cas de la présente invention, les informations soumises à la sélection sont prises dans différentes trames : il s'agit d'une opération temporelle et non plus spatiale.

Les particularités et avantages de l'invention apparaîtront maintenant de façon plus détaillée dans la description qui suit et sur la figure, donnée à titre d'exemple non limitatif et qui montre un mode de réalisation préférentiel d'un convertisseur de signaux vidéo conforme à l'invention.

Avant de décrire ce convertisseur, on va préalablement préciser quelles opérations il met successivement en oeuvre, à savoir une opération de filtrage vertical, une opération de sélection et une opération de génération de signaux vidéo non entrelacés.

L'opération de filtrage vertical consiste, à partir de signaux d'entrée constitués par les échantillons numériques successifs de signaux vidéo échantillonnés correspondant à une image entrelacée en deux trames, à calculer en chaque point de la ligne courante d'une image à générer une valeur résultant de la pondération de celles attachées aux points de même position horizontale mais appartenant à des lignes voisines (au moins deux) de cette ligne courante dans la même trame. Le nombre de lignes voisines qui peuvent ainsi intervenir est couramment égal à deux, mais peut être différent sans que l'on soit pour autant hors du cadre de l'invention.

L'opération de sélection consiste ici à opérer un tri parmi plusieurs (ici trois) valeurs dont l'une est celle du signal d'interpolation délivré à la suite de l'opération de filtrage vertical décrite ci-dessus et dont les deux autres sont celles attachées à des points de même position que celui de la ligne courante pour lequel on vient de déterminer le signal d'interpolation mais appartenant respectivement au moins à la trame qui précède et à la trame qui suit la trame contenant cette ligne courante. Dans l'exemple décrit, la nature du tri effectué est, plus précisément, le choix de celle des trois valeurs qui occupe la position médiane. Cette sélection par tri et choix de valeur intermédiaire peut bien entendu être opérée sur un nombre différent de valeurs, impair ou même pair, associées à un plus grand nombre de trames précédentes et suivantes.

La troisième opération consiste enfin en une reconstitution d'image finale non entrelacée dans laquelle la ligne courante correspond alternativement soit à une ligne de la trame d'origine, soit à une ligne reconstituée comme indiqué précédemment, c'est-à-dire par interpolation intra-trame et tri inter-trames successivement opérés. Une mémorisation temporaire permet de stocker alternativement la ligne de la trame d'origine et la ligne reconstituée qui vont se succéder dans l'image finale non entrelacée, formée par lecture des mémoires deux fois plus rapide que l'écriture puisque cette image non entrelacée a bien entendu une durée de ligne deux fois plus courte que l'image de départ.

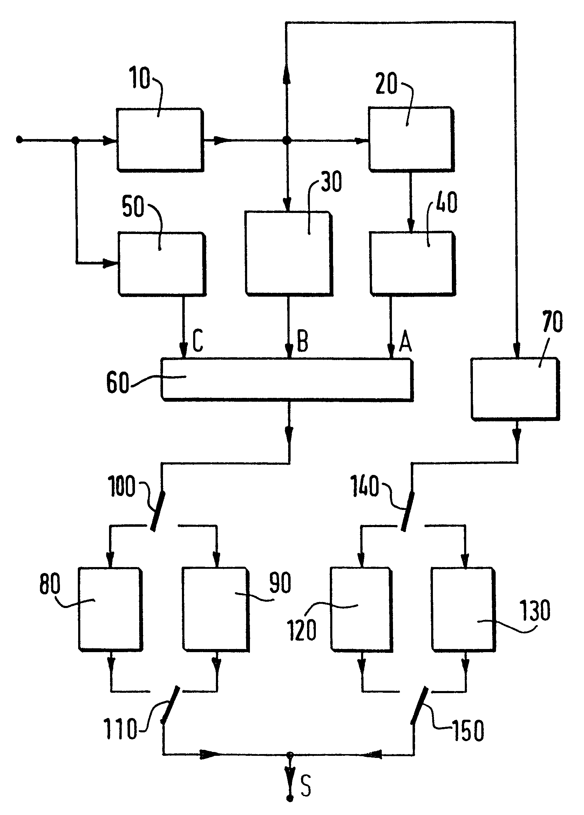

Ces précisions étant apportées, un exemple de réalisation d'un convertisseur de signaux vidéo selon l'invention est maintenant proposé sur la figure 1. Ce convertisseur comprend tout d'abord un circuit de filtrage vertical. Une première mémoire 10 retarde le signal d'entrée de la durée d'une trame moins une demi-période ligne, et une deuxième mémoire 20 retarde la sortie de la première mémoire 10 de la durée d'une trame plus une demi-période ligne. Le signal d'entrée étant un signal vidéo échantillonné qui correspond à une image entrelacée en deux trames, les deux signaux à l'entrée et en sortie de la mémoire 10 correspondent à deux lignes qui ont une position verticale voisine dans l'image, et il en est de même pour les deux signaux à l'entrée et en sortie de la mémoire 20. Les deux signaux à l'entrée de la mémoire 10 et en sortie de la mémoire 20 sont donc décalés d'une image exactement. Le circuit de filtrage vertical est un circuit d'interpolation verticale 30 qui calcule en chaque point, pour la ligne à générer, la valeur correspondante du signal par pondération des signaux associés aux points de même position horizontale sur deux, ou plusieurs, lignes voisines sélectionnées. Un exemple de circuit d'interpolation verticale, ou interpolateur de lignes, est par exemple décrit dans la demande de brevet européen EP-A-0163513.

Le convertisseur selon l'invention comprend également, en association avec le circuit de filtrage vertical, un circuit de sélection de signal composé des deux mémoires 10 et 20, de deux circuits à retard 40 et 50, et d'un circuit de tri 60. Ce circuit de tri 60 reçoit sur ses entrées A, B, C trois signaux séparés de la durée d'une trame :

- le signal sur l'entrée B est le signal d'interpolation délivré pour la trame courante par le circuit d'interpolation verticale 30 ;
- le signal sur l'entrée A et celui sur l'entrée C sont les deux signaux correspondant spatialement au même point que celui sur l'entrée B mais appartenant ici respectivement à la trame qui précède et à la trame qui suit la trame courante.

Les circuits à retard 40 et 50 sont prévus pour compenser le retard introduit par l'opération d'interpolation du circuit 30 et garantir le réalignement temporel des signaux se présentant sur les entrées A, B, C. Le circuit de tri 60 choisit alors ici, pour chaque point, celle des trois valeurs qui occupe la position intermédiaire et valide le signal correspondant.

Le convertisseur selon l'invention comprend enfin un circuit de reconstitution d'image finale par génération d'un signal vidéo non entrelacé. Ce circuit est composé d'une part d'un troisième circuit à retard 70, et d'autre part de deux jeux de mémoires 80, 90 et 120, 130. le circuit à retard 70 joue, comme les circuits 40 et 50, un rôle de réalignement temporel des signaux se présentant sur les entrées des jeux de mémoires.

L'agencement de ces jeux de mémoires est le suivant. Lorsque, dans l'image non entrelacée à reconstituer en sortie du convertisseur, la ligne courante correspond à une ligne formée par interpolation et tri successivement opérés comme indiqué, le signal de sortie du circuit de tri 60 est stocké dans l'une des mémoires 80 ou 90 et lu pendant les opérations qui concernent la ligne suivante et qui conduisent, elles, à une écriture de signal de sortie du circuit de tri 60 dans l'autre des mémoires 80 ou 90. Ainsi, les mémoires 80 et 90 sont alternativement l'une en mode d'écriture pendant que l'autre est en mode lecture, et réciproquement, à l'aide de commutateurs 100 et 110 précédant et suivant lesdites mémoires et occupant des positions toujours inverses l'une de l'autre.

Lorsque, dans l'image finale non entrelacée, la ligne courante correspond à une ligne présente, le signal prélevé est le signal de sortie de la mémoire de trame 10. Par l'intermédiaire du troisième circuit à retard 70, ce signal est fourni aux mémoires d'écriture/lecture 120 et 130 qui, associées à deux commutateurs 140 et 150, opèrent d'une façon exactement similaire à ce qui a été décrit pour les éléments 80 à 110. On dispose finalement, sur la sortie S, des signaux vidéo permettant de reconstituer l'image finale non entrelacée alternativement à partir de la sortie du commutateur 110 ou à partir de celle du commutateur 150. La lecture finale est opérée à une vitesse deux fois plus rapide que l'écriture, car l'image non entrelacée doit avoir une durée de ligne deux fois plus courte que l'image entrelacée de départ.

**Revendications**

1.  Convertisseur de signaux vidéo, caractérisé en ce qu'il comprend :

    (a) un circuit de filtrage vertical (10,30) par calcul, en chaque point de la ligne courante d'image à générer, d'une valeur résultant de la pondération de celles attachées aux points de même position horizontale mais appartenant à au moins deux lignes voisines de cette ligne courante dans la même trame, dite trame courante ;

    (b) un circuit de sélection de signaux vidéo (10, 20, 40, 50, 60) par tri et choix de la valeur intermédiaire parmi au moins trois signaux dont l'un est celui obtenu en sortie dudit circuit de filtrage vertical et dont les autres sont ceux attachés à des points de même position que ledit point de la ligne courante mais appartenant au moins à la trame qui précède et à la trame qui suit ladite trame courante ;

    (c) un circuit de reconstitution d'image finale non entrelacée (70, 80, 90, 100, 110, 120, 130, 140, 150), la ligne courante de ladite image étant constituée alternativement de la ligne correspondante de l'image initiale quand cette ligne correspondante existe et d'une ligne reconstruite selon les opérations précédentes de filtrage et de sélection quand cette ligne correspondante n'est pas présente.

2.  Convertisseur selon la revendication 1, caractérisé en ce que :

    (a) le circuit de filtrage vertical comprend un circuit d'interpolation verticale (30) par pondération des signaux associés à la ligne courante et à deux ou plusieurs lignes voisines de celle-ci dans la même trame, dite trame courante ;

    (b) le circuit de sélection comprend une première mémoire (10) retardant le signal d'entrée de la durée d'une trame moins une demi-période ligne, une deuxième mémoire (20) retardant la sortie de la première mémoire d'une trame plus une demi-période ligne, deux premier et deuxième circuits à retard (40,50) dont l'entrée est reliée pour le premier de ces circuits à l'entrée de la première mémoire (10) et pour le deuxième à la sortie de la deuxième mémoire (20), et un circuit de tri (60) recevant sur ses trois entrées A, B, C respectivement le signal de sortie du deuxième circuit à retard (50), le signal de sortie du circuit d'interpolation verticale (30), et le signal de sortie du premier circuit à retard (40), lesdits circuits à retard étant prévus pour compenser le retard introduit par ledit circuit d'interpolation verticale (30) et garantir le réalignement temporel des signaux se présentant sur lesdites entrées A, B, C ;

    (c) le circuit de reconstitution d'image finale non entrelacée comprend un premier jeu de deux mémoires (80,90) recevant alternativement la sortie du circuit de tri, (60), et un deuxième jeu de deux mémoires (120,130) recevant alternativement la sortie de la première mémoire de retard du signal d'entrée par l'intermédiaire d'un troisième circuit à retard (70) prévu également pour le réalignement temporel de ladite sortie de la première mémoire, la sortie dudit convertisseur étant constituée alternativement par la sortie du premier jeu de mémoires ou par celle du deuxième jeu de mémoires.

**Claims**

1.  A video signal converter, characterized in that it comprises:

    (a) a vertical filtering circuit (10,30) which operates by calculating, at each point of the current line of the picture to be generated, a value resulting from weighting the values assigned to the points at the same horizontal position but belonging at least to two lines adjacent to this current line in the same field, referred to as current field;

(b) a video signal selection circuit (10, 20, 40, 50, 60) which operates by sorting and choosing an intermediate value among at least three signals, one of which is the value obtained at the output of said vertical filtering circuit and the other values of which are those assigned to points at the same position as said point of the current line but belonging at least to the field preceding and the field subsequent to said current field;

(c) a circuit (70, 80, 90, 100, 110, 120, 130, 140, 150) for reconstituting the non-interlaced final picture, the current line of said picture being constituted alternately by the corresponding line of the initial picture when said corresponding line is present, and by a line reconstructed in accordance with the preceding filtering and selection operations when said corresponding line is not present.

2.  A converter as claimed in Claim 1, characterized in that:

(a) the vertical filtering circuit comprises a vertical interpolation circuit (30) that operates by weighting the signals associated with the current line and with two or a plurality of lines adjacent thereto in the same field, referred to as current field;

(b) the selection circuit comprises a first memory (10) which delays the input signal for the duration of one field minus half a line period, a second memory (20) delaying the output signal of the first memory by the duration of one field plus half a line period, first and second delay circuits (40, 50) whose respective inputs are connected for the first one of these circuits to the input of the first memory (10) and for the second one of these circuits to the output of the second memory (20), and a sorting circuit (60) receiving at its three inputs A, B, C the output signal of the second delay circuit (50), the output signal of the vertical interpolation circuit (30), and the output signal of the first delay circuit (40), respectively, said delay circuits being provided to compensate for the delay introduced by said vertical interpolation circuit (30) and to ensure the temporal realignment of the signals at said inputs A, B, C;

(c) the non-interlaced final picture reconstitution circuit comprises a first set of two memories (80, 90) which alternately receive the output signal of the sorting circuit (60), and a second set of two memories (120, 130) which alternately receive the output signal of the first memory for delaying the input signal *via* a third delay circuit (70) which is also provided for the temporal realignment of said output signal of the first memory, the output signal of said converter being formed alternately by the output signal of the first set of memories or by the output signal of the second set of memories.

**Patentansprüche**

1.  Video-Signalwandler dadurch gekennzeichnet, daß er die folgenden Schaltungsaordnungen aufweist:

(a) eine Schaltungsanordnung zur Vertikal-Filterung (10, 30) durch Berechnung, an jedem Punkt der aktullen Zeile des zu erzeugenden Bildes, eines Wertes als Ergebnis einer Gewichtung der Werte, die den Punkten an denselben horizontalen Stellen aber in mindestens zwei benachbarten Zeilen dieser aktuellen Zeile in demselben Teilbild, dem sog. aktuellen Teilbild, zugeordnet sind,

(b) eine Schaltungsanordnung zum Selektieren von Video-Signalen (10, 20, 40, 50, 60) durch Sortieren und Wählen des mittleren Wertes aus mindestens drei Signalen, von denen das eine dasjenige ist, das am Ausgang der gennanten Vertikal-Filterschaltung erhalten ist und von denen die anderen diejenigen sind, die den Punkten mit derselben Stelle wie der Punkt der aktullen Zeile zugehören, die aber mindestens in dem Teilbild erscheinen, das dem aktuellen Teilbild vorhergeht bzw. demselben folgt,

(c) eine Schaltungsanordnung zur Wiederherstellung des nicht-zeilenversprungenen Endbildes (70, 80, 90, 100, 110, 120, 130, 140, 150), wobei die aktuelle Zeile dieses Bildes abwechselnd durch die entsprechende Zeile des Eingangsbildes, wenn es diese entsprechende Zeile gibt, und durch eine gemäß den vorhergehenden Filter- und Selektionsvorgänge rekonstruierte Zeile, wenn es diese entsprechende Zeile nicht gibt, gebildet wird.

2.  Wandler nach Anspruch 1, dadurch gekennzeichnet, daß

(a) die Schaltungsanordnung zur Vertikal-Filterung eine Vertikal-Interpolationsschaltung (30) aufweist, die arbeitet durch Gewichtung der der aktuellen Zeile sowie zwei oder mehr Nachbarzeilen in demselben Teilbild zugeordneten Signale in demselben als aktuelles Teilbild bezeichneten Teilbild;

(b) die Selektionsschaltung einen ersten Speicher (10) aufweist, der das Eingangssignal um die Dauer eines Teilbildes weniger einer halben Zeilenperiode verzögert, und einen zweiten Speicher(20), der das Ausgangssignal des ersten Speichers um eine Teilbildperiode zusätzlich einer halben Zeilenperiode verzögert, weiterhin eine erste und eine zweite Verzögerungsschaltung (40, 50), deren Eingänge für die erste dieser Schaltungen mit dem Eingang des ersten Speichers (10), und für die zweite der Schaltungen mit dem Ausgang des zweiten Speichers (20) verbunden sind, und eine Sortierschaltung (60), die an ihren drei Eingängen A, B und C das Ausgangssignal der zweiten Verzögerungsschaltung (50), das Ausgangssignal der Vertikal-Interpolationsschaltung (30) bzw. das Ausgangssignal der ersten Verzögerungsschaltung (40) erhält, wobei diese Verzögerungsschaltungen dazu vorgesehen sind, die durch die genannte Vertikal-Interpolationsschaltung (30) eingeführte Verzögerung auszugleichen und die zeitliche Neuausrichtung der Signale an den genannten Eingängen A, B und C zu gewährleisten;

(c) die Schaltungsanordnung zur Wiederherstellung des nicht-zeilenversprungenen Endbildes einen ersten Satz zweier Speicher (80, 90) aufweist, die wechselweise das Ausgangssignal der Sortierschaltung (60) erhalten, und einen zweiten Satz zweier Sicher (120, 230), die wechselweise das Ausgangssignal des ersten Verzögerungsspeichers erhalten, und zwar über eine dritte Verzögerungsschaltung (70), die ebenfalls dazu vorgesehen ist, das genannte Ausgangssignal des ersten Speichers zeitlich neuauszurichten, wobei das Ausgangssignal des genannt Wandlers abwechselnd durch das Ausgangssignal des ersten Speichersatzes oder durch das des zweiten Speichersatzes gebildet wird.

EP 0 242 923 B1

7